# EUROPEAN PATENT APPLICATION

(11) **EP 4 106 238 A1**
(43) Date of publication of application: **21.12.2022**
(21) Application number: 21779186.2
(22) Date of filing: 17.03.2021
(51) Int. Cl.: H04L 1/00, H04W 72/04

(54) **WIRELESS COMMUNICATION SYSTEM AND METHOD**

(30) Priority: 31.03.2020 CN 202010241831
(71) Applicant: Huawei Technologies Co., Ltd., Shenzhen, Guangdong 518129, (CN)
(72) Inventor: WANG, Tongbo, Shenzhen, Guangdong 518129 (CN)
(74) Representative: Pfenning, Meinig & Partner mbB
(86) International application number: PCT/CN2021/081306
(87) International publication number: WO 2021/197071

(57) **Abstract**

This application provides a wireless communication system and method, and relates to the field of communication technologies. The system includes a first terminal and a routing device. The routing device is configured to perform channel availability check CAC check before performing communication based on a 5 GHz channel of a first frequency bandwidth, and broadcast a beacon frame on the 5 GHz channel of the first frequency bandwidth when detecting no radar signal, where the routing device is configured to operate on the 5 GHz channel of the first frequency bandwidth, and the first frequency bandwidth includes a dynamic frequency selection DFS channel. The first terminal is configured to perform communication based on the 5 GHz channel of the first frequency bandwidth when the first terminal is configured to operate on the 5 GHz channel of the first frequency bandwidth and receives the beacon frame on the DFS channel. In the technical solutions provided in this application, a possibility of repeatedly performing CAC check is reduced, to improve communication efficiency.

## Description

This application claims priority to Chinese Patent Application No. 202010241831.3, filed with the China National Intellectual Property Administration on March 31, 2020 and entitled "WIRELESS COMMUNICATION SYSTEM AND METHOD", which is incorporated herein by reference in its entirety.

### TECHNICAL FIELD

This application relates to the field of communication technologies, and in particular, to a wireless communication system and method.

### BACKGROUND

With continuous development of communication technologies, the wireless communication standard institute of electrical and electronics engineers (institute of electrical and electronics engineers, IEEE) 802.11ac is gradually widely used. In the standard IEEE 802.11ac, a frequency near 5 GHz and a 5 GHz channel of a 160 MHz frequency bandwidth may be used for communication, so that wireless communication efficiency can be greatly improved. However, because operating frequency bands of a global radar system are 5.25 GHz to 5.35 GHz and 5.47 GHz to 5.725 GHz, the 5 GHz channel may include a radar signal when communication is performed on the 5 GHz channel of 160 MHz.

In a conventional technology, to prevent communication interference between a terminal using the standard IEEE 802.11ac and the global radar system, before performing communication based on the 5 GHz channel of 160 MHz, the terminal needs to perform channel availability check (channel availability check, CAC) on a dynamic frequency selection (Dynamic frequency selection, DFS) channel that may include a radar signal. The terminal performs communication based on the 5 GHz channel only when the DFS channel does not include the radar signal.

However, in the foregoing technology, in a process of performing CAC, the terminal temporarily cannot perform communication based on the 5 GHz channel of 160 MHz. Consequently, communication efficiency is reduced.

### SUMMARY

In view of this, this application provides a wireless communication system and method, so that a terminal can perform communication directly based on a 5 GHz channel of a 160 MHz frequency bandwidth without a need to repeatedly perform CAC, so that communication efficiency is improved.

To achieve the foregoing objective, according to a first aspect, an embodiment of this application provides a wireless communication system. The system includes a first terminal and a routing device.

The routing device is configured to perform CAC check before performing communication based on a 5 GHz channel of a first frequency bandwidth, and broadcast a beacon frame on the 5 GHz channel of the first frequency bandwidth when detecting no radar signal, where the routing device is configured to operate on the 5 GHz channel of the first frequency bandwidth, and the first frequency bandwidth includes a DFS channel.

The first terminal is configured to perform communication based on the 5 GHz channel of the first frequency bandwidth when the first terminal is configured to operate on the 5 GHz channel of the first frequency bandwidth and receives the beacon frame on the DFS channel.

Optionally, the system further includes a second terminal.

The first terminal is further configured to: when receiving the beacon frame on the DFS channel, establish a communication connection to the second terminal based on the 5 GHz channel of the first frequency bandwidth, and communicate with the second terminal based on the communication connection.

Optionally, the first terminal is further configured to: in a process of communicating with the second terminal based on the 5 GHz channel of the first frequency bandwidth, when detecting that the DFS channel includes the radar signal, switch to a 5 GHz channel of a second frequency bandwidth, send communication data to the second terminal based on the 5 GHz channel of the second frequency bandwidth, and send a first action frame to the second terminal, where the second frequency bandwidth is less than the first frequency bandwidth, a center frequency of the second frequency bandwidth is the same as a center frequency of the first frequency bandwidth, the second frequency bandwidth does not include the DFS channel, and the first action frame indicates the second terminal to switch to the 5 GHz channel of the second frequency bandwidth.

The second terminal is configured to: when receiving the first action frame, switch to the 5 GHz channel of the second frequency bandwidth, and send communication data to the first terminal based on the 5 GHz channel of the second frequency bandwidth.

Optionally, the routing device is further configured to: in a process of performing communication based on the 5 GHz channel of the first frequency bandwidth, stop, when detecting that the DFS channel includes the radar signal, broadcasting the beacon frame on the 5 GHz channel of the first frequency bandwidth, perform CAC check again when at least first preset duration after the stopping reaches, and broadcast the beacon frame on the 5 GHz channel of the first frequency bandwidth again when detecting no radar signal.

The first terminal is further configured to: in a process of sending the communication data to the second terminal based on the 5 GHz channel of the second frequency bandwidth, when receiving the beacon frame on the DFS channel again, switch to the 5 GHz channel of the first frequency bandwidth again, send communication data to the second terminal based on the 5 GHz channel of the first frequency bandwidth, and send a second action frame to the second terminal, where the second action frame indicates the second terminal to switch to the 5 GHz channel of the first frequency bandwidth.

The second terminal is further configured to: when receiving the second action frame, switch to the 5 GHz channel of the first frequency bandwidth again, and send communication data to the first terminal based on the 5 GHz channel of the first frequency bandwidth.

Optionally, the first terminal is further configured to: in a process of performing communication based on the 5 GHz channel of the first frequency bandwidth, when detecting that the DFS channel includes the radar signal, switch to a 5 GHz channel of a second frequency bandwidth to perform communication, where the second frequency bandwidth is less than the first frequency bandwidth, a center frequency of the second frequency bandwidth is the same as a center frequency of the first frequency bandwidth, and the second frequency bandwidth does not include the DFS channel.

Optionally, the routing device is further configured to: in a process of performing communication based on the 5 GHz channel of the first frequency bandwidth, stop, when detecting that the DFS channel includes the radar signal, broadcasting the beacon frame on the 5 GHz channel of the first frequency bandwidth, perform CAC check again when at least first preset duration after the stopping reaches, and broadcast the beacon frame on the 5 GHz channel of the first frequency bandwidth again when detecting no radar signal.

The first terminal is further configured to: in a process of performing communication based on the 5 GHz channel of the second frequency bandwidth, when receiving the beacon frame on the DFS channel again, switch to the 5 GHz channel of the first frequency bandwidth again to perform communication.

Optionally, the system includes a plurality of routing devices, and the first terminal is further configured to determine, based on a routing device identifier included in the beacon frame, a quantity of routing devices that currently perform communication based on the 5 GHz channel of the first frequency bandwidth, and perform communication based on the 5 GHz channel of the first frequency bandwidth when determining that the quantity of routing devices is greater than a preset quantity threshold.

Optionally, the first terminal is further configured to increase the quantity of routing devices by 1 when obtaining the routing device identifier from the beacon frame and determining that the routing device identifier belongs to a preset routing device whitelist.

Optionally, the first terminal is further configured to increase the quantity of routing devices by 1 when obtaining the routing device identifier from the beacon frame and determining that the routing device identifier does not belong to a preset routing device blacklist.

Optionally, the first terminal is further configured to perform communication based on a 5 GHz channel of a second frequency bandwidth when determining that the quantity of routing devices is less than or equal to the preset quantity threshold, where the second frequency bandwidth is less than the first frequency bandwidth, a center frequency of the second frequency bandwidth is the same as a center frequency of the first frequency bandwidth, and the second frequency bandwidth does not include the DFS channel.

Optionally, the first terminal is further configured to perform communication based on the 5 GHz channel of the first frequency bandwidth when the first terminal is configured to operate on the 5 GHz channel of the first frequency bandwidth and receives the beacon frame on the DFS channel within second preset duration after the configuration, where the second preset duration is less than CAC check duration.

Optionally, the first terminal is further configured to perform communication based on the 5 GHz channel of the second frequency bandwidth when the first terminal is configured to operate on the 5 GHz channel of the first frequency bandwidth but does not receive the beacon frame on the DFS channel within the second preset duration, where the second frequency bandwidth is less than the first frequency bandwidth, the center frequency of the second frequency bandwidth is the same as the center frequency of the first frequency bandwidth, and the second frequency bandwidth does not include the DFS channel.

Optionally, the first terminal is further configured to: send a third action frame to the routing device when the first terminal is configured to operate on the 5 GHz channel of the first frequency bandwidth, receive a fourth action frame sent by the routing device based on the third action frame, and perform communication based on the 5 GHz channel of the first frequency bandwidth when determining, based on the fourth action frame, that the DFS channel is available or receiving the beacon frame on the DFS channel, where the third action frame requests to query whether the DFS channel is available, and the fourth action frame indicates a query result of the DFS channel.

The routing device is further configured to: if the routing device receives the third action frame, query whether the DFS channel is available, and send the fourth action frame to the first terminal based on the query result.

Optionally, the first terminal includes an access point (Access Point, AP) or a group owner (Group Owner, GO), and the second terminal includes a station (station, STA) or a group client (Group Clients, GC).

Optionally, the routing device is further configured to perform CAC check after a startup, after initialization, or before entering the 5 GHz channel of the first frequency bandwidth again.

Optionally, the first frequency bandwidth includes 160 MHz, the second frequency bandwidth includes 80 MHz, and the DFS channel includes 5.26 GHz to 5.32 GHz.

Optionally, the first preset duration is greater than or equal to 30 minutes.

In this embodiment of this application, the first frequency bandwidth includes the DFS channel. For the routing device configured to operate on the 5 GHz channel of the first frequency bandwidth, the routing device may perform CAC check before performing communication based on the 5 GHz channel, and broadcast the beacon frame on the 5 GHz channel, that is, start to perform communication on the 5 GHz channel, when detecting no radar signal. In this case, when a first routing device is configured to operate on the 5 GHz channel, if the first routing device can receive the beacon frame on the DFS channel, the first routing device can determine that the DFS channel is available currently, and does not need to repeatedly perform CAC check, so that the first routing device can perform communication directly based on the 5 GHz channel, to improve communication efficiency.

According to a second aspect, an embodiment of this application provides a wireless communication system. The system includes a first terminal and a routing device.

The first terminal is configured to: send a third action frame to the routing device on a non-DFS channel when the first terminal is configured to operate on a 5 GHz channel of a first frequency bandwidth, receive a fourth action frame sent by the routing device based on the third action frame, and perform communication based on the 5 GHz channel of the first frequency bandwidth when determining, based on the fourth action frame, that a DFS channel is available, where the first frequency bandwidth includes the DFS channel, the third action frame requests to query whether the DFS channel is available, and the fourth action frame indicates a query result of the DFS channel.

The routing device is configured to: when receiving the third action frame, query whether the DFS channel is available, and send the fourth action frame to the first terminal based on the query result.

Optionally, the system further includes a second terminal.

The first terminal is further configured to: if the first terminal determines, based on the fourth action frame, that the DFS channel is available, establish a communication connection to the second terminal based on the 5 GHz channel of the first frequency bandwidth, and communicate with the second terminal based on the communication connection.

Optionally, the first terminal is further configured to: in a process of communicating with the second terminal based on the 5 GHz channel of the first frequency bandwidth, when detecting that the DFS channel includes a radar signal, switch to a 5 GHz channel of a second frequency bandwidth, send communication data to the second terminal based on the 5 GHz channel of the second frequency bandwidth, and send a first action frame to the second terminal, where the second frequency bandwidth is less than the first frequency bandwidth, a center frequency of the second frequency bandwidth is the same as a center frequency of the first frequency bandwidth, the second frequency bandwidth does not include the DFS channel, and the first action frame indicates the second terminal to switch to the 5 GHz channel of the second frequency bandwidth.

The second terminal is configured to: when receiving the first action frame, switch to the 5 GHz channel of the second frequency bandwidth, and send communication data to the first terminal based on the 5 GHz channel of the second frequency bandwidth.

Optionally, the first terminal is further configured to: in a process of sending the communication data to the second terminal based on the 5 GHz channel of the second frequency bandwidth, send the third action frame to the routing device again when duration after latest switching to the 5 GHz channel of the second frequency bandwidth reaches at least first preset duration, receive again the fourth action frame sent by the routing device based on the third action frame, switch to the 5 GHz channel of the first frequency bandwidth again when determining, based on the fourth action frame, that the DFS channel is available, send communication data to the second terminal based on the 5 GHz channel of the first frequency bandwidth, and send a second action frame to the second terminal, where the second action frame indicates the second terminal to switch to the 5 GHz channel of the first frequency bandwidth.

The second terminal is further configured to: when receiving the second action frame again, switch to the 5 GHz channel of the first frequency bandwidth again, and send communication data to the first terminal based on the 5 GHz channel of the first frequency bandwidth.

Optionally, the first terminal is further configured to: in a process of sending the communication data to the second terminal based on the 5 GHz channel of the second frequency bandwidth, when receiving, on the DFS channel, a beacon frame sent by the routing device, switch to the 5 GHz channel of the first frequency bandwidth again, send communication data to the second terminal based on the 5 GHz channel of the first frequency bandwidth, and send a second action frame to the second terminal.

In this embodiment of this application, the first frequency bandwidth includes the DFS channel. When a first routing device is configured to operate on the 5 GHz channel, the first routing device may actively send the third action frame to the routing device, to query, from the routing device, whether the DFS channel is available. When receiving a fourth beacon frame fed back by the routing device, the first routing device may directly determine, based on the fourth beacon frame without a need to repeatedly perform CAC check, whether the DFS channel is available, thereby directly performing communication based on the 5 GHz channel, to improve communication efficiency.

According to a third aspect, an embodiment of this application provides a wireless communication method, applied to a first terminal in a wireless communication system, where the wireless communication system further includes a routing device; and including:
performing communication based on a 5 GHz channel of a first frequency bandwidth when being configured to operate on the 5 GHz channel of the first frequency bandwidth and receiving a beacon frame on a DFS channel.

The beacon frame is broadcast by the routing device on the 5 GHz channel of the first frequency bandwidth when the routing device performs CAC check before performing communication based on the 5 GHz channel of the first frequency bandwidth and detects no radar signal, where the routing device is configured to operate on the 5 GHz channel of the first frequency bandwidth, and the first frequency bandwidth includes the DFS channel.

According to a fourth aspect, an embodiment of this application provides a wireless communication method, applied to a first terminal in a wireless communication system, where the wireless communication system further includes a routing device; and including:
sending a third action frame to the routing device on a non-DFS channel when being configured to operate on the 5 GHz channel of the first frequency bandwidth;
receiving a fourth action frame sent by the routing device based on the third action frame; and
performing communication based on the 5 GHz channel of the first frequency bandwidth when determining, based on the fourth action frame, that the DFS channel is available.

The first frequency bandwidth includes the DFS channel, the third action frame requests to query whether the DFS channel is available, the fourth action frame indicates a query result of the DFS channel, and the fourth action frame is sent by the routing device to the first terminal based on the query result after the routing device receives the third action frame and queries whether the DFS channel is available.

According to a fifth aspect, an embodiment of this application provides a wireless communication apparatus, used in a first terminal in a wireless communication system, where the wireless communication system further includes a routing device; and including:
a communication module, configured to perform communication based on a 5 GHz channel of a first frequency bandwidth when being configured to operate on the 5 GHz channel of the first frequency bandwidth and receiving a beacon frame on a DFS channel.

The beacon frame is broadcast by the routing device on the 5 GHz channel of the first frequency bandwidth when the routing device performs CAC check before performing communication based on the 5 GHz channel of the first frequency bandwidth and detects no radar signal, where the routing device is configured to operate on the 5 GHz channel of the first frequency bandwidth, and the first frequency bandwidth includes the DFS channel.

According to a sixth aspect, an embodiment of this application provides a wireless communication apparatus, used in a first terminal in a wireless communication system, where the wireless communication system further includes a routing device; and including:
a sending module, configured to send a third action frame to the routing device on a non-DFS channel when being configured to operate on the 5 GHz channel of the first frequency bandwidth;
a receiving module, configured to receive a fourth action frame sent by the routing device based on the third action frame; and
a communication module, configured to perform communication based on the 5 GHz channel of the first frequency bandwidth when determining, based on the fourth action frame, that the DFS channel is available.

The first frequency bandwidth includes the DFS channel, the third action frame requests to query whether the DFS channel is available, the fourth action frame indicates a query result of the DFS channel, and the fourth action frame is sent by the routing device to the first terminal based on the query result after the routing device receives the third action frame and queries whether the DFS channel is available.

According to a seventh aspect, an embodiment of this application provides a terminal, including a memory and a processor. The memory is configured to store a computer program. The processor is configured to perform the method according to the third aspect or the fourth aspect when invoking the computer program.

According to an eighth aspect, an embodiment of this application provides a computer-readable storage medium. The computer-readable storage medium stores a computer program. When the computer program is executed by a processor, the method according to any implementation of the third aspect or the fourth aspect is implemented.

According to a ninth aspect, an embodiment of this application provides a computer program product. When the computer program product runs on a terminal, the terminal is enabled to perform the wireless communication method according to either of the third aspect or the fourth aspect.

It may be understood that, for beneficial effects of the third aspect to the ninth aspect, refer to the related descriptions in the first aspect and the second aspect. Details are not described herein again.

### BRIEF DESCRIPTION OF DRAWINGS

FIG. 1 is a schematic diagram of a scenario of a wireless communication system according to a conventional technology;
FIG. 2 is a schematic diagram of a scenario of a wireless communication system according to this application;
FIG. 3 is a schematic diagram of an interface of a terminal device according to this application;
FIG. 4 is a schematic diagram of another interface of a terminal device according to this application;
FIG. 5 is a schematic flowchart of a wireless communication method according to this application;
FIG. 6A and FIG. 6B are a schematic flowchart of another wireless communication method according to this application;
FIG. 7 is a schematic flowchart of another wireless communication method according to this application;
FIG. 8A and FIG. 8B are a schematic flowchart of another wireless communication method according to this application;
FIG. 9 is a schematic diagram of a structure of a wireless communication apparatus according to an embodiment of this application;
FIG. 10 is a schematic diagram of a structure of another wireless communication apparatus according to an embodiment of this application;
FIG. 11 is a schematic diagram of a structure of a terminal according to this application;
FIG. 12 is a block diagram of a structure of software of a terminal according to this application; and
FIG. 13 is a schematic diagram of a structure of a terminal according to an embodiment of this application.

### DESCRIPTION OF EMBODIMENTS

To facilitate understanding of the technical solutions in embodiments of this application, the following first describes an application scenario of embodiments of this application.

IEEE 802.11ac is a wireless networking standard in the 802.11 family, is formulated by the IEEE Standards Association, and may provide a high-throughput wireless local area network in a 5 GHz frequency band. A device that supports IEEE 802.11ac may perform communication on a 5 GHz channel of a 160 MHz frequency bandwidth at most. A theoretical transmission speed may reach 1 Gbps.

The 5 GHz frequency band includes 5.15 GHz to 5.825 GHz, and is divided into 201 5 GHz channels. However, only some 5 GHz channels are available. For example, in some countries and regions, channels 36, 40, 44, 48, 52, 56, 60, and 64 are available. A frequency bandwidth of each channel is 20 MHz. A frequency band of the channels 52, 56, 60, and 64 is 5.26 GHz to 5.32 GHz. To improve communication efficiency, adjacent channels may be combined to obtain a channel of a larger frequency bandwidth. For example, two adjacent channels in the foregoing eight 20 MHz channels are combined, so that four 40 MHz channels can be obtained; four adjacent channels in the foregoing eight 20 MHz channels are combined, so that two 80 MHz channels can be obtained; and the eight channels are combined, so that one 160 MHz channel can be obtained. Because operating frequency bands of a global radar system are 5.25 GHz to 5.35 GHz and 5.47 GHz to 5.725 GHz, it is obvious that a 5 GHz channel of 160 MHz always includes a radar channel (or referred to as a DFS channel) when a communication device that supports the IEEE 802.11ac uses the 5 GHz channel for communication. Therefore, to prevent interference to a radar signal, when the communication device is started up or is configured to use the 5G channel of 160 MHz for communication, the communication device first needs to perform CAC check, to determine whether the DFS channel includes the radar signal. If the DFS channel includes the radar signal within CAC check duration (which is usually one minute), it indicates that the radar signal is transmitted on the DFS channel in the 5G channel, and the communication device does not use the 5 GHz channel for communication. If no radar signal is included within CAC check duration, it indicates that no radar signal is transmitted on the DFS channel in the 5 GHz channel, and the communication device may use the 5 GHz channel of 160 MHz for communication after the CAC.

However, the communication device receives wireless data on the 5 GHz channel of 160 MHz when detecting the radar signal within the CAC check duration, and determines, if receiving the wireless data, that the radar signal exists. Therefore, the communication device cannot communicate with another communication device within the CAC check duration. If the communication device is an AP, another communication device as a STA cannot find the AP within the CAC check duration.

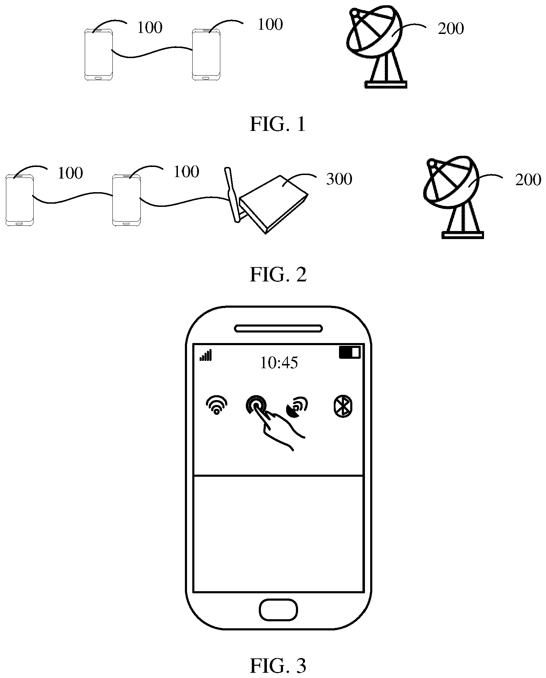

FIG. 1 is a schematic diagram of a scenario of a wireless communication system according to a conventional technology. The wireless communication system includes terminals 100 and a global radar system 200.

The terminal 100 may include a mobile phone, a tablet computer, or an intelligent wearable device. The terminal 100 may support the standard 802.11ac. A plurality of terminals 100 may communicate with each other based on a 5 GHz channel of a 160 MHz frequency bandwidth, for example, peer-to-peer (peer-to-peer, P2P) communication. The terminal 100 further has a DFS channel check capability, to detect whether a DFS channel includes a radar signal.

The global radar system 200 may include any radar system, for example, a military radar system or a meteorological radar system.

If two terminals 100 need to communicate with each other based on the 5 GHz channel of the 160 MHz frequency bandwidth, one terminal is used as an AP, and the other terminal is used as a STA, the terminal 100 as the AP needs to first perform CAC check when enabling an AP function, to determine that the DFS channel is available. If no radar signal is detected on the DFS channel within CAC check duration, it is determined that the DFS channel is available and then it is determined that the 5 GHz channel of the 160 MHz frequency bandwidth is available. Therefore, AP-related information may be broadcast on the 5 GHz channel. Correspondingly, the other terminal 100 as the STA may find the AP based on the AP-related information, and communicate with the AP.

Therefore, it is obvious that the AP and the STA cannot communicate with each other in a time period in which the AP performs CAC.

FIG. 2 is a schematic diagram of a scenario of a wireless communication system according to this application. The wireless communication system may include terminals 100, a global radar system 200, and a routing device 300.

The routing device 300 may include a router. The routing device 300 may be used as an AP, and access the Internet, so that the terminal 100 may be connected to the Internet by using the routing device 300, to communicate with another device in the Internet. In addition, the access manner may include wired communication or wireless communication. This is not specifically limited herein. In this embodiment of this application, the routing device 300 may be configured to enable the terminal 100 to sense whether a 5 GHz channel of a 160 MHz frequency bandwidth is available. Therefore, the routing device 300 may have a capability of performing communication based on the 5 GHz channel and a DFS channel check capability.

In this embodiment of this application, because the router 300 may have the capability of performing communication based on the 5 GHz channel of the 160 MHz frequency bandwidth and the DFS channel check capability; and when the routing device 300 is performing communication based on the 5 GHz channel, it may also indicate that there is no radar signal on a DFS channel currently, that is, the 5 GHz channel is available currently. Therefore, the terminal 100 may sense, from the surrounding routing device 300, whether the 5 GHz channel is available. In this case, when the terminal 100 is started up or is configured to use the 5 GHz channel of the 160 MHz frequency bandwidth, the terminal 100 may first sense, from the surrounding routing device 300, whether the 5 GHz channel of the 160 MHz frequency bandwidth is available currently. If yes, CAC does not need to be repeatedly performed, and communication may be performed directly based on the 5 GHz channel.

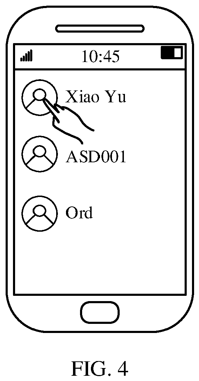

FIG. 3 and FIG. 4 each are a schematic diagram of an interface of a terminal device according to an embodiment of this application. In FIG. 3, when a user taps an AP icon, a terminal 100 may determine that an AP function is enabled. That is, the terminal 100 is configured to obtain availability status indication information of a 5 GHz channel of a 160 MHz frequency bandwidth from a routing device 300 based on the 5 GHz channel. If that the 5 GHz channel is available may be determined based on the availability status indication information, CAC check may not need to be repeatedly performed, so that AP-related information may be broadcast directly on the 5 GHz channel. Another terminal 100 as a STA may directly find an AP. As shown in FIG. 4, an interface of the terminal 100 may display identification information of the found AP. When receiving a tap operation of the user based on the identification information, the STA establishes a communication connection to and communicates with the AP. For example, if the user taps "Xiao Yu", the STA may establish a communication connection to and communicate with an AP represented by "Xiao Yu".

It can be learned through comparison with the conventional technology that, in the wireless communication system provided in this application, when performing communication based on the 5 GHz channel of 160 MHz, the terminal 100 may not need to repeatedly perform CAC check, that is, may directly perform communication, to improve communication efficiency.

Certainly, before performing communication based on the 5 GHz channel of 160 MHz by using a mode, for example, a GO & GC mode, other than an AP & STA mode, the terminals 100 may alternatively sense, in a same manner from the surrounding routing device 300, whether the 5 GHz channel is available, and does not perform CAC check again and performs communication directly based on the 5 GHz channel when determining that the 5 GHz channel is available.

The following explains some terms in embodiments of this application.

A first terminal and a second terminal may be the foregoing terminals 100 (for example, mobile phones). The first terminal may be used as a master device, for example, a GO or an AP, and the second terminal may be used as a slave device, for example, a GC or a STA.

A frequency bandwidth may indicate a maximum data rate of a channel, and may include 20 MHz, 40 MHz, 80 MHz, or 160 MHz. A higher bandwidth indicates a higher data transmission rate and higher communication efficiency. In embodiments of this application, when communicating with each other, the first terminal and the second terminal may preferentially attempt to perform communication based on a 5 GHz channel of 160 MHz. When the 5 GHz channel is unavailable or in another special environment, a 5 GHz channel of 20 MHz, 40 MHz, or 80 MHz with lower communication efficiency may be used for communication.

DFS is a method for dynamically selecting a communication channel. In embodiments of this application, a DFS channel (or a radar channel) may be used for radar signal transmission and 5G communication that complies with the standard 802.11a. To prevent interference of the 5G communication that complies with the standard 802.11a to a radar signal, in a process of occupying the DFS for the 5G communication, if the radar signal is detected on the DFS channel, the DFS channel may be avoided.

A 5 GHz channel of A first frequency bandwidth may be a preset channel preferentially used for communication between the first terminal and the second terminal. The first frequency bandwidth may include the DFS channel. For example, the first frequency bandwidth may include 160 MHz. Before performing communication, whether the first terminal or the second terminal has a capability of using the 5 GHz channel for communication may be checked. If yes, the 5 GHz channel may be set to a first channel.

A 5 GHz channel of a second frequency bandwidth may be a preset 5 GHz channel used for communication between the first terminal and the second terminal when the 5 GHz channel of the first frequency bandwidth is unavailable. A center frequency of the second frequency bandwidth may be the same as a center frequency of the first frequency bandwidth. The second frequency bandwidth may be less than the first frequency bandwidth, and does not include the DFS channel. For example, when the first frequency bandwidth is 160 MHz, the second frequency bandwidth may include 80 MHz.

Specific embodiments are used below to describe in detail the technical solutions in this application. The following several specific embodiments may be combined with each other, and a same or similar concept or process may not be described repeatedly in some embodiments.

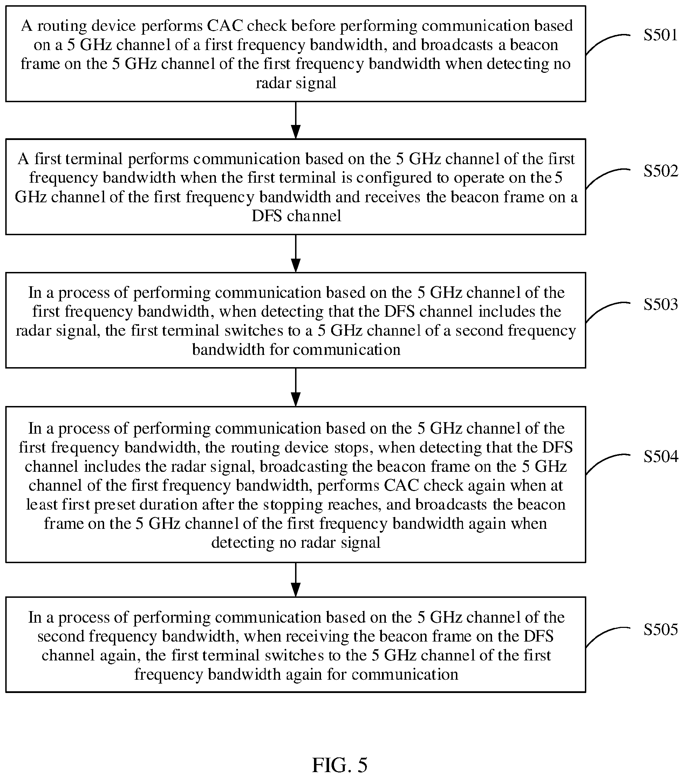

FIG. 5 is a schematic flowchart of a wireless communication method according to this application. The wireless communication method may be applied to interaction between devices in a wireless communication system. The wireless communication system may include a first terminal and a routing device, and may further include a second terminal. The method includes the following steps.

S501: The routing device performs CAC check before performing communication based on a 5 GHz channel of a first frequency bandwidth, and broadcasts a beacon frame on the 5 GHz channel of the first frequency bandwidth when detecting no radar signal.

The routing device may be configured to operate on the 5 GHz channel of the first frequency bandwidth. A case of the routing device before communication is performed based on the 5 GHz channel of the first frequency bandwidth may include entering the 5 GHz channel for the first time after a startup or initialization, or may include switching from a channel that is based on another frequency bandwidth to the 5 GHz channel again.

Because the first frequency bandwidth includes a radar channel, to prevent interference of a process in which the routing device performs communication based on the 5 GHz channel of the first frequency bandwidth to the radar signal, the routing device may perform CAC check after the startup, after the initialization, or before entering the 5 GHz channel of the first frequency bandwidth again for communication.

CAC check duration may be one minute, or certainly may be other preset duration. A value of the CAC check duration is not specifically limited in this embodiment of this application. When performing CAC check, the routing device may receive communication data on a DFS channel. If the routing device receives no radar signal (that is, the received communication data does not include the radar signal) within the CAC check duration, the routing device may determine that the 5 GHz channel of the first frequency bandwidth is available. Therefore, the routing device may perform communication based on the 5 GHz channel of the first frequency bandwidth.

The routing device may broadcast the beacon frame (beacon frame) on each channel included in the 5 GHz channel of the first frequency bandwidth. The beacon frame may include a service set identifier (Service Set Identity, SSID), a basic service set identifier (Basic Service Set, BSSID), very high throughput capabilities (Very High Throughput Capabilities, VHT Capabilities), very high throughput operation information (VHT Operation Information), and the like. The SSID may be used for a network in which the routing device is located. The BSSID may include a media access control address (Media Access Control Address, MAC) of the router. A field Supported Channel Width set in the VHT capabilities indicates whether 160 MHz is supported, where 0 indicates that 160 MHz is not supported, 1 indicates that only 160 MHz is supported, and 2 indicates that both 160 MHz and 80+80 MHz are supported. A field Channel Width in the VHT operation information indicates a frequency bandwidth, where 0 indicates that the frequency bandwidth is 20 MHz or 40 MHz currently, 1 indicates that the frequency bandwidth is 80 MHz, and 2 indicates that the frequency bandwidth is 160 MHz. When a field Channel Center Frequency 1 is used for 160 MHz, it indicates a current center channel. The information may be set when the routing device is configured to operate on the 5 GHz channel of the first frequency bandwidth.

S502: The first terminal performs communication based on the 5 GHz channel of the first frequency bandwidth when the first terminal is configured to operate on the 5 GHz channel of the first frequency bandwidth and receives the beacon frame on the DFS channel.

It can be learned from the foregoing descriptions that the beacon frame is sent by the routing device when the routing device starts to perform communication based on the 5 GHz channel after determining that the 5 GHz channel of the first frequency bandwidth is available. Therefore, when the first terminal receives the beacon frame on the DFS channel, it may indicate that the routing device has already performed communication on the DFS channel, and the DFS channel is available. In this case, CAC check may not need to be repeatedly performed, so that communication can be performed directly based on the 5 GHz channel of the first frequency bandwidth, to improve communication efficiency.

A case in which the first terminal is configured to operate on the 5 GHz channel of the first frequency bandwidth may include: A communication mode based on the 5 GHz channel of the first frequency bandwidth is a preferred or default communication mode of the first terminal, and the 5 GHz channel is used for communication after the first terminal is started up or initialized; or a switch for enabling the communication mode may be turned on.

It should be noted that a manner in which the first terminal performs communication based on the 5 GHz channel of the first frequency bandwidth herein may be performing broadcasting on the 5 GHz channel, for example, the first terminal acts as an AP to broadcast a beacon frame of the first terminal; or may be communicating with a specific target, for example, establishing a communication connection to the routing device in S501 and then performing communication based on the communication connection, or for example, establishing a communication connection to another terminal and performing communication based on the communication connection. The manner in which the first terminal performs communication based on the 5 GHz channel of the first frequency bandwidth is not specifically limited in this embodiment of this application.

In addition, there may be a plurality of routing devices around the first terminal, and a larger quantity of routing devices currently working on the 5 GHz channel of the first frequency bandwidth indicates higher reliability of current availability of the DFS channel. Therefore, in some embodiments, to increase the reliability of whether the DFS channel is available currently, the first terminal may obtain a routing device identifier (for example, the foregoing SSID or BSSID) included in the beacon frame, determine a quantity of routing devices that perform communication based on the 5 GHz channel of the first frequency bandwidth currently, and perform communication based on the 5 GHz channel of the first frequency bandwidth when the quantity of routing devices is greater than a preset quantity threshold.

The preset quantity threshold may be set in advance. For example, the preset quantity threshold may include an integer greater than or equal to 1.

Optionally, to further improve the reliability of the current availability of the DFS channel, a detected routing device may be filtered by using a preset routing device blacklist or routing device whitelist. In a process of determining the quantity of routing devices that perform communication based on the 5 GHz channel of the first frequency bandwidth currently, when the routing device identifier is obtained from the beacon frame and it is determined that the routing device identifier belongs to the preset routing device whitelist, the quantity of routing devices is increased by 1, that is, only a quantity of routing devices that send beacon frames and that belong to the routing device whitelist is detected; or when the routing device identifier is obtained from the beacon frame and it is determined that the routing device identifier does not belong to the preset routing device blacklist, the quantity of routing devices is increased by 1, that is, only a quantity of routing devices that send beacon frames but do not belong to the routing device blacklist is detected; and then the detected quantity of routing devices is compared with the preset quantity threshold.

It should be noted that the routing device whitelist may include a device identifier of at least one routing device, for example, the basic service set identifier (Basic Service Set Identifier, BSSID), to indicate that these routing devices can accurately and reliably indicate whether the DFS channel or the 160 MHz frequency bandwidth is available. The routing device blacklist may include a device identifier of at least one routing device, to indicate that these routing devices cannot accurately indicate whether the DFS channel is available.

It should be further noted that the routing device whitelist or the routing device blacklist may be stored in a cloud server. The first terminal may send a device identifier of a routing device to the cloud server. Then the cloud server queries whether the routing device belongs to the routing device whitelist or the routing device blacklist. In addition, after learning, from the routing device, whether the DFS channel is available, the first terminal may compare a real case of detecting, in a communication process, whether a DFS signal includes the radar signal with an availability status that is of the DFS channel and that is obtained from the routing device. If a real status of detecting the radar signal on the DFS channel within specified duration (for example, the first one minute) after communication starts is inconsistent with the availability status that is of the DFS channel and that is obtained from the routing device, it is determined that the routing device is unreliable, and the device identifier of the routing device may be sent to the cloud server, to update the routing device blacklist. If a real status of detecting the radar signal on the DFS channel within specified duration (for example, the first one minute) after communication starts is consistent with the availability status that is of the DFS channel and that is obtained from the routing device, it may be determined that the routing device is reliable, and the device identifier of the routing device is sent to the cloud server, to update the routing device whitelist. Certainly, during actual application, the routing device whitelist or the routing device blacklist may alternatively be set in advance in another manner. For example, a setting interface of the routing device whitelist or the routing device blacklist may be provided for a user, and then a routing device submitted by the user for the routing device whitelist or the routing device blacklist is received by using the setting interface.

In addition, in some embodiments, to ensure that the first terminal device can perform communication as soon as possible without disturbing the radar signal, when it is determined that the quantity of routing devices is less than or equal to the preset quantity threshold, communication is performed based on a 5 GHz channel of a second frequency bandwidth. Alternatively, in some other embodiments, duration of detecting the beacon frame by the first terminal on the DFS channel may be limited. For example, when the first terminal is configured to operate on the 5 GHz channel of the first frequency bandwidth, and receives the beacon frame on the DFS channel within second preset duration after the configuration, the first terminal may perform communication based on the 5 GHz channel of the first frequency bandwidth; or when the first terminal does not receive the beacon frame on the DFS channel within second preset duration, the first terminal performs communication based on a 5 GHz channel of a second frequency bandwidth. The second preset duration may be set in advance, and the second preset duration may be less than the CAC check duration. For example, when the CAC check duration is 1 minute, the second preset duration may be 30 seconds.

S503: In a process of performing communication based on the 5 GHz channel of the first frequency bandwidth, when detecting that the DFS channel includes the radar signal, the first terminal switches to the 5 GHz channel of the second frequency bandwidth for communication.

To prevent interference of the process of performing communication by the first terminal based on the 5 GHz channel of the first frequency bandwidth to the radar signal, the first terminal may switch from the 5 GHz channel of the first frequency bandwidth to the 5 GHz channel of the second frequency bandwidth when detecting that the DFS channel includes the radar signal (that is, the DFS channel is unavailable). In addition, because a center frequency of the second frequency bandwidth is the same as a center frequency of the first frequency bandwidth, switching from the 5 GHz channel of the first frequency bandwidth to the 5 GHz channel of the second frequency bandwidth is merely switching of a frequency bandwidth, and does not cause interruption of receiving or sending communication data, so that only a data transmission speed of a communication service of the first terminal changes, and data transmission is not interrupted, to improve communication reliability.

It should be noted that the radar signal is interfered with only when the first terminal sends the communication data on the DFS channel, and receiving the data does not interfere with the radar signal. Therefore, when switching to the 5 GHz channel of the second frequency bandwidth for communication, the first terminal may switch to the 5 GHz channel of the second frequency bandwidth to send the communication data, and continue to receive the communication data on the 5 GHz channel of the first frequency bandwidth. This can not only ensure that efficiency of receiving the communication data is not reduced, but also continue to detect whether the DFS channel includes the radar signal.

For example, the first frequency bandwidth is 160 MHz, and the second frequency bandwidth is 80 MHz. When performing communication based on a 5 GHz channel of 160 MHz, the first terminal may send and receive communication data on the 5 GHz channel of 160 MHz. When switching to a 5 GHz channel of 80 MHz for communication, the first terminal may send the communication data on the 5 GHz channel of 80 MHz, and receive the communication data on the 5 GHz channel of 160 MHz.

S504: In the process of performing communication based on the 5 GHz channel of the first frequency bandwidth, the routing device stops, when detecting that the DFS channel includes the radar signal, broadcasting the beacon frame on the 5 GHz channel of the first frequency bandwidth, performs CAC check again when at least first preset duration after the stopping reaches, and broadcasts the beacon frame on the 5 GHz channel of the first frequency bandwidth again when detecting no radar signal.

The routing device may also stop, when detecting that the DFS channel includes the radar signal, communication that is performed based on the 5 GHz channel of the first frequency bandwidth, including stopping broadcasting the beacon frame on the 5 GHz channel, to prevent the radar signal from being interfered with. This case is similar to the case of the first terminal. In addition, CAC check may be performed again, to perform communication again on the 5 GHz channel after the radar signal on the DFS channel disappears.

The first preset duration may be set in advance. For example, the first preset duration may include 30 minutes. Certainly, during actual application, the first preset duration may alternatively include other duration. A value of the first preset duration is not specifically limited in this embodiment of this application.

Certainly, if the routing device detects the radar signal on the DFS channel in a CAC check process, it indicates that the DFS channel is still occupied by a global radar system currently. Therefore, timing may be performed again, and CAC check is performed again when timing is performed for at least the first preset duration.

It should be noted that, in this embodiment of this application, in the process of performing communication based on the 5 GHz channel of the first frequency bandwidth, the first terminal may detect whether the DFS channel includes the radar signal. However, in some other embodiments, the first terminal may alternatively not detect whether the DFS channel includes the radar signal. Instead, related skilled persons set, in advance in a specific management frame, a field for broadcasting and notifying that the DFS channel is unavailable currently, and then the routing device broadcasts the specific management frame after detecting that the DFS channel includes the radar signal. Correspondingly, when receiving the specific management frame, the first terminal may determine that the DFS channel includes the radar signal.

S505: In a process of performing communication based on the 5 GHz channel of the second frequency bandwidth, when receiving the beacon frame on the DFS channel again, the first terminal switches to the 5 GHz channel of the first frequency bandwidth again for communication.

When receiving the beacon frame on the DFS channel again, the first terminal may determine that a routing device operates on the 5 GHz channel of the first frequency bandwidth again, that is, the 5 GHz channel is available. Therefore, the first terminal may switch to the 5 GHz channel of the first frequency bandwidth again for communication, to maintain a high data transmission speed as much as possible, and further improve communication efficiency.

In this embodiment of this application, the first frequency bandwidth includes the DFS channel. For the routing device configured to operate on the 5 GHz channel of the first frequency bandwidth, the routing device may perform CAC check before performing communication based on the 5 GHz channel, and broadcast the beacon frame on the 5 GHz channel, that is, start to perform communication on the 5 GHz channel, when detecting no radar signal. In this case, when a first routing device is configured to operate on the 5 GHz channel, if the first routing device can receive the beacon frame on the DFS channel, the first routing device can determine that the DFS channel is available currently, and does not need to repeatedly perform CAC check, so that the first routing device can perform communication directly based on the 5 GHz channel, to improve communication efficiency.

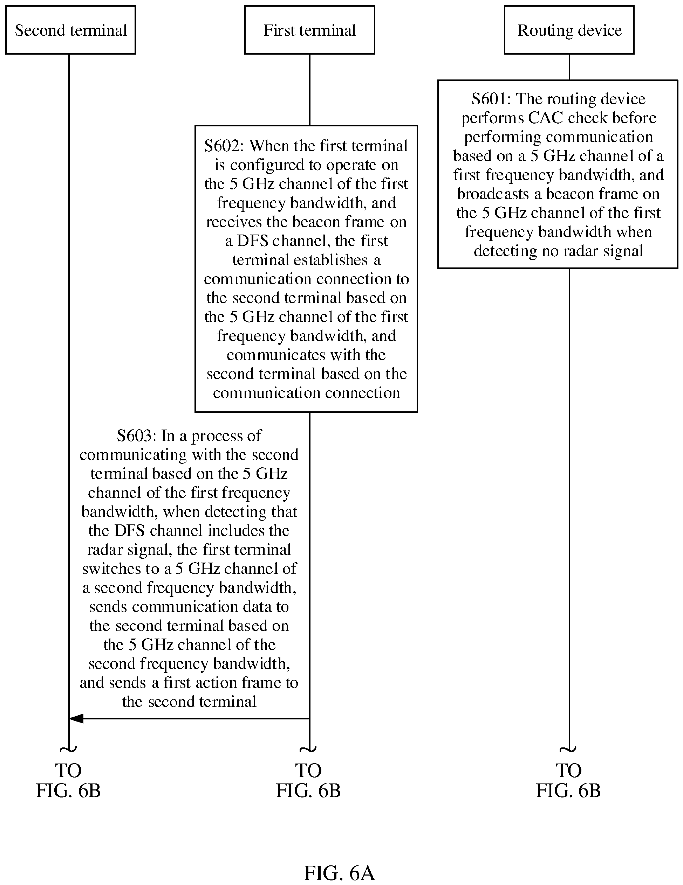

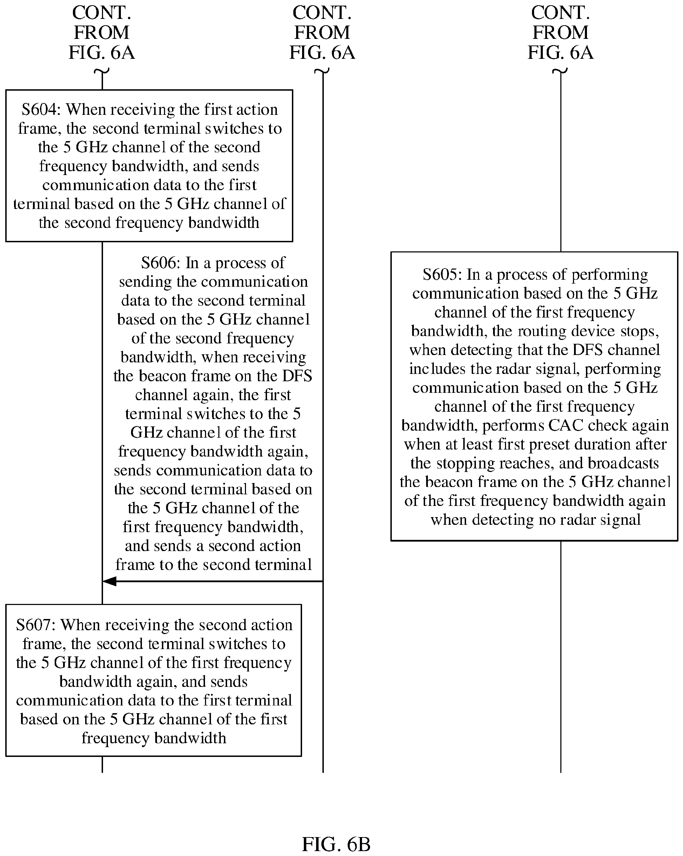

FIG. 6A and FIG. 6B are a schematic flowchart of a wireless communication method according to this application. The wireless communication method may be applied to interaction between devices in a wireless communication system. The wireless communication system may include a first terminal, a second terminal, and a routing device. The method includes the following steps.

S601: The routing device performs CAC check before performing communication based on a 5 GHz channel of a first frequency bandwidth, and broadcasts a beacon frame on the 5 GHz channel of the first frequency bandwidth when detecting no radar signal.

The routing device is configured to operate on the 5 GHz channel of the first frequency bandwidth.

It should be noted that an execution manner of S601 is the same as that of S501. Details are not described one by one herein again.

S602: When the first terminal is configured to operate on the 5 GHz channel of the first frequency bandwidth, and receives the beacon frame on a DFS channel, the first terminal establishes a communication connection to the second terminal based on the 5 GHz channel of the first frequency bandwidth, and communicates with the second terminal based on the communication connection.

To help the first terminal communicate with the second terminal based on the 5 GHz channel of the first frequency bandwidth as soon as possible, prevent unnecessary CAC check performed by the first terminal and unnecessary waiting time of the second terminal, and improve communication efficiency, when the first terminal is configured to operate on the 5 GHz channel of the first frequency bandwidth, if the first terminal can receive the beacon frame on the DFS channel already, the first terminal can determine that the DFS channel is available, and can directly establish the communication connection to and communicate with the second terminal based on the 5 GHz channel.

When the first terminal is configured to operate on the 5 GHz channel of the first frequency bandwidth, the first terminal may first act as a STA to receive the beacon frame of the routing device. After determining that the DFS channel is available, the first terminal may act as an AP or a GO to establish the communication connection to and communicate with the second terminal as a STA or a GC based on the 5 GHz channel of the first frequency bandwidth.

An AP & STA mode is used as an example. After receiving the beacon frame from the routing device, the first terminal as an AP may broadcast a beacon frame of the first terminal on the 5 GHz channel of the first frequency bandwidth. The second terminal as a STA receives the beacon frame of the first terminal, and establishes a communication connection to the first terminal on the 5 GHz channel based on the received beacon frame. Then, the first terminal and the second terminal may receive and send communication data on the 5 GHz channel. Similarly, in a GO & GC mode, the first terminal as a GO may establish a communication connection to and communicate with a GC on the 5 GHz channel after receiving the beacon frame of the routing device.

S603: In a process of communicating with the second terminal based on the 5 GHz channel of the first frequency bandwidth, when detecting that the DFS channel includes the radar signal, the first terminal switches to a 5 GHz channel of a second frequency bandwidth, sends communication data to the second terminal based on the 5 GHz channel of the second frequency bandwidth, and sends a first action frame (action frame) to the second terminal.

The first action frame indicates the second terminal to switch to the 5 GHz channel of the second frequency bandwidth.

It should be noted that an action frame is a management frame that may be used for a specific network action. Therefore, a channel switch announcement (Channel Switch Announcement) element may be set in the first action frame, to indicate, by using the channel switch announcement element, the 5 GHz channel to which the second terminal is to be switched.

S604: When receiving the first action frame, the second terminal switches to the 5 GHz channel of the second frequency bandwidth, and sends communication data to the first terminal based on the 5 GHz channel of the second frequency bandwidth.

To prevent interference of sending the communication data by the second terminal on the DFS channel to the radar signal, the second terminal may switch, based on the first action frame sent by the first terminal, to the 5 GHz channel of the second frequency bandwidth to send the communication data to the first terminal, and keep receiving the communication data from the first terminal on the 5 GHz channel of the first frequency bandwidth.

When S604 is completed, both the first terminal and the second terminal may send the communication data to each other on the 5 GHz channel of the second frequency bandwidth, and receive the communication data on the 5 GHz channel of the first frequency bandwidth.

S605: In a process of performing communication based on the 5 GHz channel of the first frequency bandwidth, the routing device stops, when detecting that the DFS channel includes the radar signal, performing communication based on the 5 GHz channel of the first frequency bandwidth, performs CAC check again when at least first preset duration after the stopping reaches, and broadcasts the beacon frame on the 5 GHz channel of the first frequency bandwidth again when detecting no radar signal.

S605 is the same as S504. Details are not described one by one herein again.

S606: In a process of sending the communication data to the second terminal based on the 5 GHz channel of the second frequency bandwidth, when receiving the beacon frame on the DFS channel again, the first terminal switches to the 5 GHz channel of the first frequency bandwidth again, sends the communication data to the second terminal based on the 5 GHz channel of the first frequency bandwidth, and sends a second action frame to the second terminal.

The second action frame indicates the second terminal to switch to the 5 GHz channel of the first frequency bandwidth.

When receiving the beacon frame on the DFS channel again, the first terminal may determine that the DFS channel is available. Therefore, the first terminal may communicate with the second terminal based on the 5 GHz channel of the second frequency bandwidth again, to further improve the efficiency of the communication between the first terminal and the second terminal.

It should be noted that a form of the second action frame may be the same as a form of the first action frame, and a difference lies in that the first action frame indicates to switch to the 5 GHz channel of the second frequency bandwidth for communication, and the second action frame indicates to switch to the 5 GHz channel of the first frequency bandwidth for communication.

S607: When receiving the second action frame, the second terminal switches to the 5 GHz channel of the first frequency bandwidth again, and sends the communication data to the first terminal based on the 5 GHz channel of the first frequency bandwidth.

When S607 is completed, the first terminal and the second terminal send the communication data to each other and receive the communication data from each other based on the 5 GHz channel of the first frequency bandwidth again.

In this embodiment of this application, the first frequency bandwidth includes the DFS channel. For the routing device configured to operate on the 5 GHz channel of the first frequency bandwidth, the routing device may perform CAC check before performing communication based on the 5 GHz channel, and broadcast the beacon frame on the 5 GHz channel, that is, start to perform communication on the 5 GHz channel, when detecting no radar signal. In this case, when a first routing device is configured to operate on the 5 GHz channel, if the first routing device can receive the beacon frame on the DFS channel, the first routing device can determine that the DFS channel is available currently, and does not need to repeatedly perform CAC check. Similarly, the second terminal does not need to wait for the first terminal to perform CAC check either, so that communication can be performed directly based on the 5 GHz channel, to improve the communication efficiency.

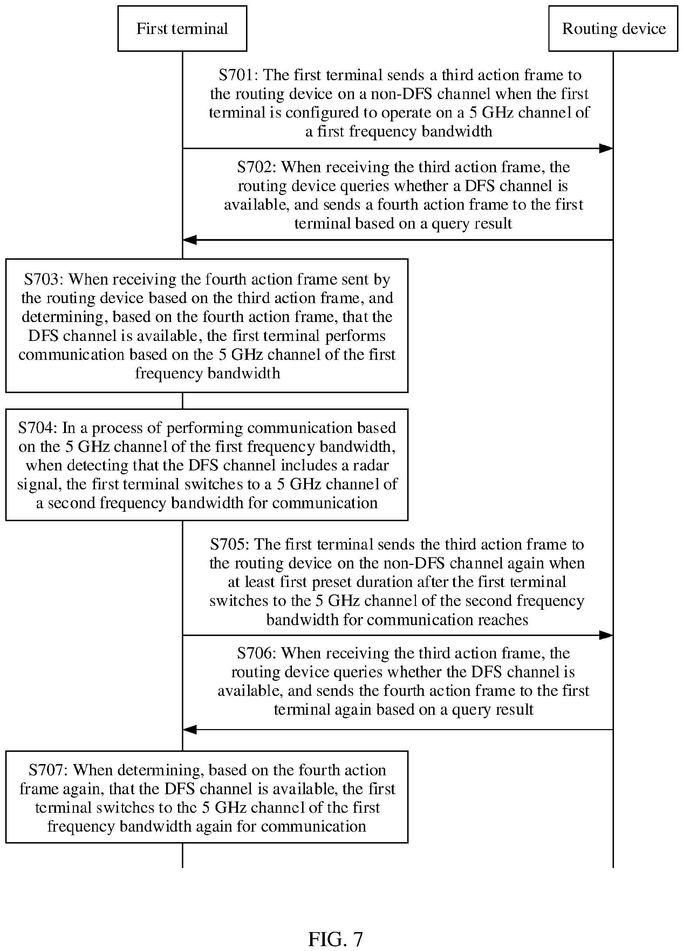

FIG. 7 is a schematic flowchart of a wireless communication method according to this application. The wireless communication method may be applied to interaction between devices in a wireless communication system. The wireless communication system may include a first terminal and a routing device. The method includes the following steps.

S701: The first terminal sends a third action frame to the routing device on a non-DFS channel when the first terminal is configured to operate on a 5 GHz channel of a first frequency bandwidth.

The third action frame requests to query whether a DFS channel is available.

The routing device may not broadcast a beacon frame, or the first terminal cannot receive the beacon frame. Therefore, to ensure that the first terminal can sense, in time, whether the DFS channel is available, the first terminal may actively send the third action frame to the routing device. In addition, to prevent interference of a process of sending the third action frame to a radar signal, the third action frame may be sent on the non-DFS channel.

It should be noted that a field for requesting the routing device to query whether the DFS channel is available may be set in an action frame in advance, so that the third action frame can request to query whether the DFS channel is available.

S702: When receiving the third action frame, the routing device queries whether the DFS channel is available, and sends a fourth action frame to the first terminal based on a query result.

The fourth action frame indicates the query result of the DFS channel.

It should be noted that a field indicating a DFS channel check result may be set in an action frame in advance, to obtain the fourth action frame. For example, the DFS channel check result may be indicated by using 1 or 0, where 1 indicates that the DFS channel is available, and 0 indicates that the DFS channel is unavailable.

It should be further noted that, if the routing device currently operates on the 5 GHz channel of the first frequency bandwidth, the routing device may determine that the DFS channel is available currently. Certainly, the routing device may determine, in another manner (for example, by performing CAC check), whether the DFS channel is available currently, for example, learn, from another routing device in a manner similar to that of the first terminal, whether the DFS channel is available currently.

In addition, similar to a manner of sending the third action frame, the routing device may send the fourth action frame on the non-DFS channel.

S703: When receiving the fourth action frame sent by the routing device based on the third action frame, and determining, based on the fourth action frame, that the DFS channel is available, the first terminal performs communication based on the 5 GHz channel of the first frequency bandwidth.

When receiving the fourth action frame, the first terminal may determine, based on the related field that is in the fourth action frame and that indicates the DFS check result, whether the DFS channel is available. For example, when determining that the field is 1, the first terminal may determine that the DFS channel is available, and then may perform communication based on the 5 GHz channel of the first frequency bandwidth.

It should be noted that for a manner in which the first terminal performs communication based on the 5 GHz channel of the first frequency bandwidth, refer to the related descriptions in S502. Details are not described one by one herein again.

S704: In a process of performing communication based on the 5 GHz channel of the first frequency bandwidth, when detecting that the DFS channel includes the radar signal, the first terminal switches to a 5 GHz channel of a second frequency bandwidth for communication.

It should be noted that S704 may be the same as S503. Details are not described one by one herein again.

S705: The first terminal sends the third action frame to the routing device on the non-DFS channel again when at least first preset duration after the first terminal switches to the 5 GHz channel of the second frequency bandwidth for communication reaches (that is, duration after latest switching to the 5 GHz channel of the second frequency bandwidth reaches at least the first preset duration).

S706: When receiving the third action frame, the routing device queries whether the DFS channel is available, and sends the fourth action frame to the first terminal again based on a query result.

S707: When determining, based on the fourth action frame again, that the DFS channel is available, the first terminal switches to the 5 GHz channel of the first frequency bandwidth again for communication.

It should be noted that S705 and S706 may be the same as S701 and S702, a manner of determining, based on the fourth action frame, whether the DFS channel is available in S707 may be the same as that in S703, and a manner of switching to the 5 GHz channel of the first frequency bandwidth again for communication in S707 may be the same as that in S505. Details are not described one by one herein again.

In this embodiment of this application, the first frequency bandwidth includes the DFS channel. When a first routing device is configured to operate on the 5 GHz channel, the first routing device may actively send the third action frame to the routing device, to query, from the routing device, whether the DFS channel is available. When receiving a fourth beacon frame fed back by the routing device, the first routing device may directly determine, based on the fourth beacon frame without a need to repeatedly perform CAC check, whether the DFS channel is available, thereby directly performing communication based on the 5 GHz channel, to improve communication efficiency.

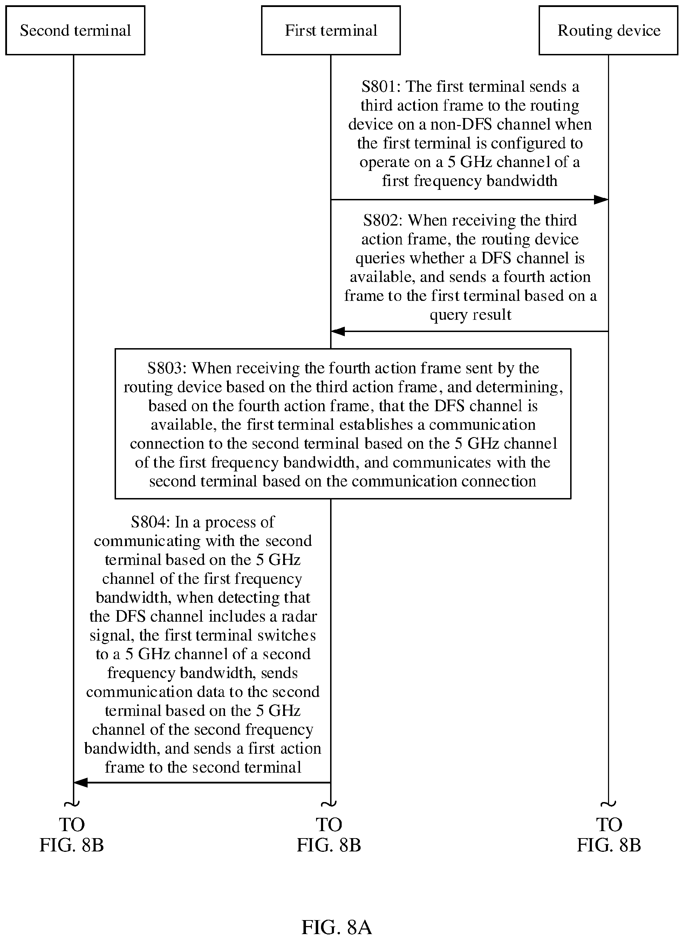

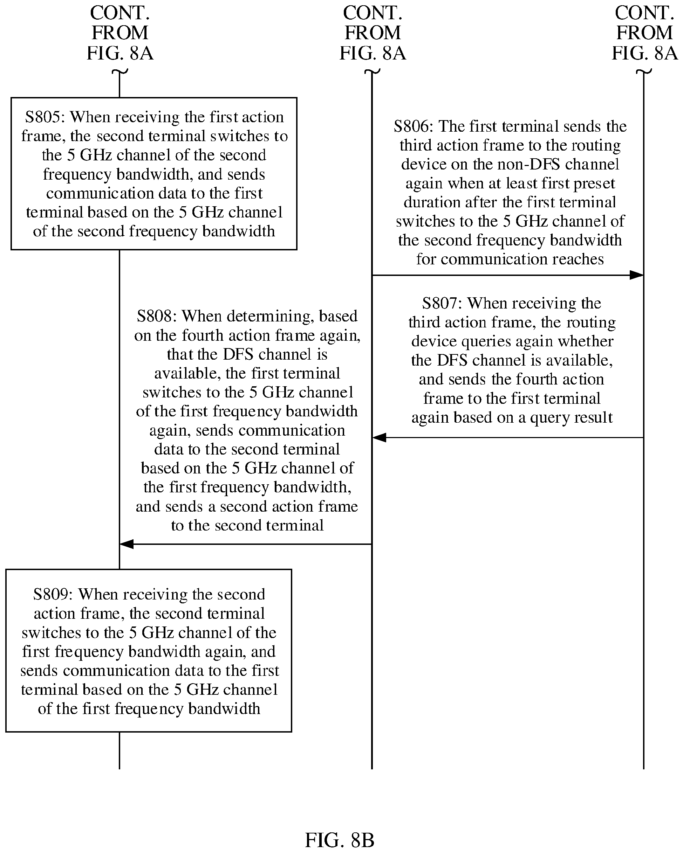

FIG. 8A and FIG. 8B are a schematic flowchart of a wireless communication method according to this application. The wireless communication method may be applied to interaction between devices in a wireless communication system. The wireless communication system may include a first terminal and a routing device. The method includes the following steps.

S801: The first terminal sends a third action frame to the routing device on a non-DFS channel when the first terminal is configured to operate on a 5 GHz channel of a first frequency bandwidth.

It should be noted that S801 may be the same as S701. Details are not described one by one herein again.

S802: When receiving the third action frame, the routing device queries whether a DFS channel is available, and sends a fourth action frame to the first terminal based on a query result.

It should be noted that S802 may be the same as S702. Details are not described one by one herein again.

S803: When receiving the fourth action frame sent by the routing device based on the third action frame, and determining, based on the fourth action frame, that the DFS channel is available, the first terminal establishes a communication connection to a second terminal based on the 5 GHz channel of the first frequency bandwidth, and communicates with the second terminal based on the communication connection.

It should be noted that a manner of determining, based on the fourth action frame, whether the DFS channel is available in S803 may be the same as that in S703, and a manner of establishing the communication connection to the second terminal based on the 5 GHz channel of the first frequency bandwidth and communicating with the second terminal based on the communication connection in S803 may be the same as that in S602. Details are not described one by one herein again.

S804: In a process of communicating with the second terminal based on the 5 GHz channel of the first frequency bandwidth, when detecting that the DFS channel includes a radar signal, the first terminal switches to a 5 GHz channel of a second frequency bandwidth, sends communication data to the second terminal based on the 5 GHz channel of the second frequency bandwidth, and sends a first action frame to the second terminal.

S805: When receiving the first action frame, the second terminal switches to the 5 GHz channel of the second frequency bandwidth, and sends communication data to the first terminal based on the 5 GHz channel of the second frequency bandwidth.

S804 and S805 may be the same as S603 and S604. Details are not described one by one herein again.

S806: The first terminal sends the third action frame to the routing device on the non-DFS channel again when at least first preset duration after the first terminal switches to the 5 GHz channel of the second frequency bandwidth for communication reaches.

S807: When receiving the third action frame, the routing device queries again whether the DFS channel is available, and sends the fourth action frame to the first terminal again based on a query result.

It should be noted that S806 and S807 may be the same as S705 and S706. Details are not described one by one herein again.

S808: When determining, based on the fourth action frame again, that the DFS channel is available, the first terminal switches to the 5 GHz channel of the first frequency bandwidth again, sends communication data to the second terminal based on the 5 GHz channel of the first frequency bandwidth, and sends a second action frame to the second terminal.

S809: When receiving the second action frame, the second terminal switches to the 5 GHz channel of the first frequency bandwidth again, and sends communication data to the first terminal based on the 5 GHz channel of the first frequency bandwidth.

It should be noted that a manner in which the first terminal and the second terminal switch to the 5 GHz channel of the first frequency bandwidth again for communication in S808 and S809 may be the same as that in S606 and S607. Details are not described one by one herein again.

In this embodiment of this application, the first frequency bandwidth includes the DFS channel. When a first routing device is configured to operate on the 5 GHz channel, the first routing device may actively send the third action frame to the routing device, to query, from the routing device, whether the DFS channel is available. When receiving a fourth beacon frame fed back by the routing device, the first routing device may directly determine, based on the fourth beacon frame without a need to repeatedly perform CAC check, whether the DFS channel is available. Similarly, the second terminal does not need to wait for the first terminal to perform CAC check either, so that communication can be performed directly based on the 5 GHz channel, to improve communication efficiency.

It should be noted that the foregoing embodiments may be combined. The following provides several example manners.

In a combination manner, the first terminal may sense, from the routing device by using the method in FIG. 5 or FIG. 7 sequentially, whether the DFS channel is available. For example, the first terminal may first determine, by obtaining the beacon frame from the routing device, whether the DFS channel is available currently. If the first terminal receives no beacon frame within third preset duration, the first terminal actively sends the third action frame to the routing device, to request the routing device to query whether the DFS channel is available. Alternatively, the first terminal may first actively send the third action frame to the routing device. If the first terminal does not receive the fourth action frame within the third preset duration, the first terminal detects, by using the DFS channel, whether the beacon frame can be received, where a sum of the third preset duration and the second preset duration may be less than the CAC check duration.

In another combination manner, the first terminal senses, from the routing device in the manner in FIG. 5 or FIG. 7 simultaneously, whether the DFS channel is available. When the first terminal is configured to operate on the 5 GHz channel of the first frequency bandwidth, the first terminal may receive the beacon frame on the DFS channel and send the third action frame to the routing device, receive the fourth action frame sent by the routing device based on the third action frame, and perform communication based on the 5 GHz channel of the first frequency bandwidth when determining, based on the fourth action frame, that the DFS channel is available or when successfully receiving the beacon frame on the DFS channel.

In another combination manner, when the first terminal is configured to operate on the 5 GHz channel of the first frequency bandwidth, the first terminal first senses, in the manner in FIG. 5 or FIG. 7, whether the DFS channel is available, and switches from the 5 GHz channel of the first frequency bandwidth to the 5 GHz channel of the second frequency bandwidth when the DFS channel is available. In the process of performing communication on the 5 GHz channel of the second frequency bandwidth, the first terminal then senses, in the other manner in FIG. 5 and FIG. 7, whether the DFS channel is available, and switches to the 5 GHz channel of the first frequency bandwidth again for communication when the DFS channel is available. For example, in the embodiment shown in FIG. 8A and FIG. 8B, in the process of sending the communication data to the second terminal based on the 5 GHz channel of the second frequency bandwidth, when receiving, on the DFS channel, the beacon frame sent by the routing device, the first terminal switches to the 5 GHz channel of the first frequency bandwidth again, sends the communication data to the second terminal based on the 5 GHz channel of the first frequency bandwidth, and sends the second action frame to the second terminal, to notify, by using the second action frame, the second terminal to switch to the 5 GHz channel of the first frequency bandwidth again for communication.

Based on a same inventive concept, in an implementation of the foregoing method, embodiments of this application provide a wireless communication apparatus. The apparatus embodiment corresponds to the foregoing method embodiment. For ease of reading, details in the foregoing method embodiment are not described one by one in the apparatus embodiment. However, it should be clarified that the apparatus in this embodiment can correspondingly implement all content in the foregoing method embodiment.

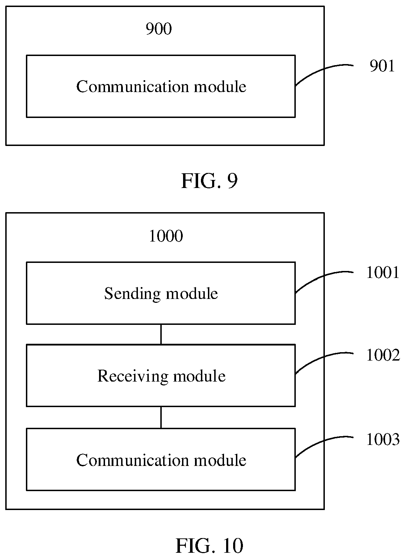

FIG. 9 is a schematic diagram of a structure of a wireless communication apparatus 900 according to an embodiment of this application. The apparatus 900 provided in this embodiment is used in a first terminal in a wireless communication system. The wireless communication system further includes a routing device. The apparatus 900 includes a communication module 901.

The communication module is configured to perform communication based on a 5 GHz channel of a first frequency bandwidth when being configured to operate on the 5 GHz channel of the first frequency bandwidth and receiving a beacon frame on a DFS channel.

The beacon frame is broadcast by the routing device on the 5 GHz channel of the first frequency bandwidth when the routing device performs CAC check before performing communication based on the 5 GHz channel of the first frequency bandwidth and detects no radar signal, where the routing device is configured to operate on the 5 GHz channel of the first frequency bandwidth, and the first frequency bandwidth includes the DFS channel.

The wireless communication apparatus provided in this embodiment may perform the method embodiment provided in FIG. 5 or FIG. 6A and FIG. 6B. Implementation principles and technical effects of the apparatus are similar to those of the method embodiment. Details are not described herein again.

FIG. 10 is a schematic diagram of a structure of a wireless communication apparatus according to an embodiment of this application. The apparatus provided in this embodiment is used in a first terminal in a wireless communication system. The wireless communication system further includes a routing device. The apparatus includes a sending module 1001, a receiving module 1002, and a communication module 1003.

The sending module 1001 is configured to send a third action frame to the routing device on a non-DFS channel when being configured to operate on the 5 GHz channel of the first frequency bandwidth.

The receiving module 1002 is configured to receive a fourth action frame sent by the routing device based on the third action frame.

The communication module 1003 is configured to perform communication based on the 5 GHz channel of the first frequency bandwidth when determining, based on the fourth action frame, that the DFS channel is available.

The first frequency bandwidth includes the DFS channel, the third action frame requests to query whether the DFS channel is available, the fourth action frame indicates a query result of the DFS channel, and the fourth action frame is sent by the routing device to the first terminal based on the query result after the routing device receives the third action frame and queries whether the DFS channel is available.

The wireless communication apparatus provided in this embodiment may perform the method embodiment in FIG. 7 or FIG. 8A and FIG. 8B. Implementation principles and technical effects of the apparatus are similar to those of the method embodiment. Details are not described herein again.

It may be clearly understood by persons skilled in the art that, for the purpose of convenient and brief description, division into the foregoing function units and modules is used as an example for illustration. During actual application, the foregoing functions can be allocated to different function units and modules for implementation based on a requirement, that is, an inner structure of the apparatus is divided into different function units or modules to implement all or some of the foregoing functions. Function units and modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely for ease of distinguishing between the function units and modules, but are not intended to limit the protection scope of this application. For a specific working process of the units and modules in the foregoing system, refer to a corresponding process in the foregoing method embodiments. Details are not repeatedly described herein.

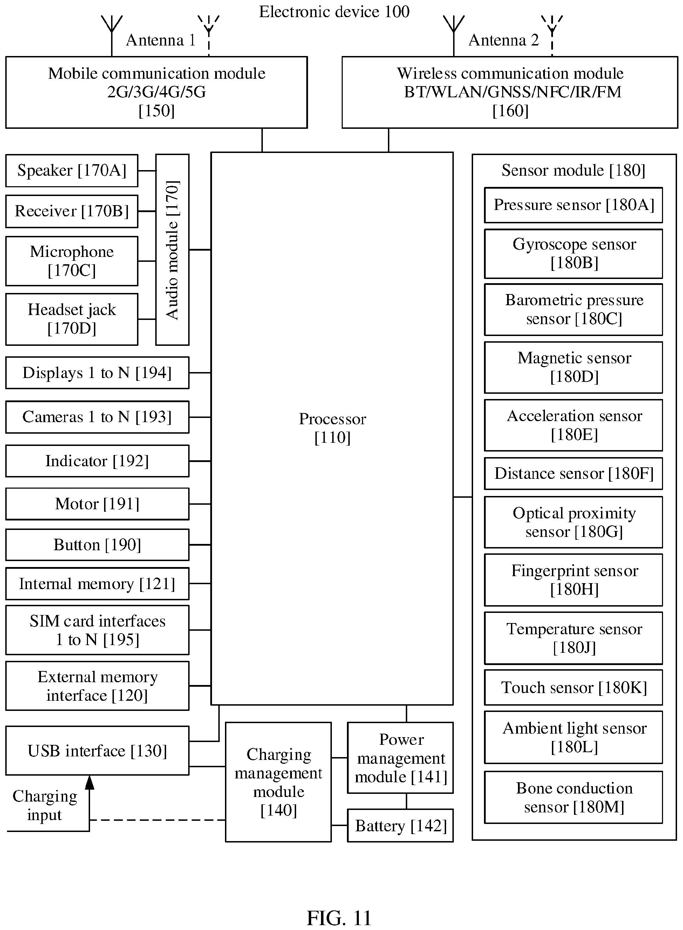

FIG. 11 is a schematic diagram of a structure of a terminal 100 according to this application. The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal 100. In some other embodiments of this application, the terminal 100 may include more or fewer components than those shown in the figure, combine some components, split some components, or have different component arrangements. The components shown in the figure may be implemented by hardware, software, or a combination of the software and the hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has just been used or is cyclically used by the processor 110. If the processor 110 needs to use the instruction or the data again, the processor 110 may directly invoke the instruction or the data from the memory. This reduces repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal 100. The processor 110 communicates with the display 194 through the DSI interface, to implement a display function of the terminal 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal 100, may be configured to transmit data between the terminal 100 and a peripheral device, or may be configured to connect to a headset for playing audio through the headset. The interface may be further configured to connect to another terminal such as an AR device.

It may be understood that an interface connection relationship between the modules in this embodiment of this application is merely an example for description, and does not constitute a limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. The charging management module 140 may further supply power to the terminal 100 by using the power management module 141 while charging the battery 142.

The power management module 141 is configured to connect the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a solution, applied to the terminal 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to a modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the terminal 100, to wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal 100, the antenna 1 is coupled to the mobile communication module 150, and the antenna 2 is coupled to the wireless communication module 160, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. A photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transform and the like on frequency energy.

The video codec is configured to compress or decompress a digital video. The terminal 100 may support one or more video codecs. In this way, the terminal 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. The NPU quickly processes input information by referring to a structure of a biological neural network, for example, a transfer mode between human brain neurons, and may further continuously perform self-learning. The NPU can implement applications such as intelligent cognition of the terminal 100, such as image recognition, facial recognition, speech recognition, and text understanding.

The external memory interface 120 may be configured to connect to an external memory card, for example, a micro SD card, to extend a storage capability of the terminal 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a voice playing function or an image playing function), and the like. The data storage area may store data (for example, audio data and a phone book) and the like created when the terminal 100 is used. In addition, the internal memory 121 may include a high-speed random access memory, or may include a nonvolatile memory, for example, at least one magnetic disk storage device, a flash memory, or a universal flash storage (universal flash storage, UFS).

The terminal 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The terminal 100 may listen to music or answer a call in a hands-free mode by using the speaker 170A.

The receiver 170B, also referred to as an "earpiece", is configured to convert an electrical audio signal into a sound signal. When a call is answered or a voice message is listened to by using the terminal 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure strength based on a capacitance change. When a touch operation is performed on the display 194, the terminal 100 detects intensity of the touch operation by using the pressure sensor 180A. The terminal 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a short message service message application icon, an instruction for viewing a short message service message is executed. When a touch operation whose touch operation intensity is greater than or equal to a first pressure threshold is performed on a short message service message application icon, an instruction for creating a short message service message is executed.

The gyro sensor 180B may be configured to determine a moving posture of the terminal 100. In some embodiments, angular velocities of the terminal 100 around three axes (namely, x, y, and z axes) may be determined by using the gyro sensor 180B. The gyro sensor 180B may be configured to implement image stabilization during photographing. For example, when the shutter is opened, the gyro sensor 180B detects an angle at which the terminal 100 jitters, calculates, based on the angle, a distance for which a lens module needs to compensate, and allows the lens to cancel the jitter of the terminal 100 through reverse motion, to implement image stabilization. The gyro sensor 180B may also be used in a navigation scenario and a somatic game scenario.

The barometric pressure sensor 180C is configured to measure barometric pressure. In some embodiments, the terminal 100 calculates an altitude by using a barometric pressure value measured by the barometric pressure sensor 180C, to assist positioning and navigation.

The magnetic sensor 180D includes a Hall sensor. The terminal 100 may detect opening and closing of a flip leather case by using the magnetic sensor 180D. In some embodiments, when the terminal 100 is a clamshell phone, the terminal 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect values of accelerations of the terminal 100 in various directions (usually on three axes). When the terminal 100 is still, a value and a direction of gravity may be detected. The acceleration sensor 180E may further be configured to recognize a posture of a terminal, and is applied in an application such as a pedometer or screen switching between a landscape mode and a portrait mode.

The distance sensor 180F is configured to measure a distance. The terminal 100 may measure a distance through infrared light or a laser. In some embodiments, the terminal 100 may use the distance sensor 180F to measure a distance, to implement fast focusing in a photographing scenario.

The optical proximity sensor 180G may include, for example, a light emitting diode (LED) and an optical detector, for example, a photodiode. The light emitting diode may be an infrared light emitting diode. The terminal 100 emits infrared light by using the light emitting diode. The terminal 100 detects infrared reflected light from a nearby object by using the photodiode. When sufficient reflected light is detected, it may be determined that there is an object near the terminal 100. When insufficient reflected light is detected, the terminal 100 may determine that there is no object near the terminal 100. The terminal 100 may detect, by using the optical proximity sensor 180G, that the terminal 100 held by the user is close to an ear for a call, to automatically turn off a screen to save power. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the terminal 100 is in a pocket to prevent a false touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy by using the temperature detected by the temperature sensor 180J. For example, when the temperature reported by the temperature sensor 180J exceeds a threshold, the terminal 100 lowers performance of a processor located near the temperature sensor 180J, to reduce power consumption to implement thermal protection. In some other embodiments, when the temperature is lower than another threshold, the terminal 100 heats the battery 142 to reduce abnormal shutdown of the terminal 100 because of a low temperature. In some other embodiments, when the temperature is lower than still another threshold, the terminal 100 boosts an output voltage of the battery 142 to reduce abnormal shutdown caused by a low temperature.

The touch sensor 180K is also referred to as a touch panel. The touch sensor 180K may be disposed on the display 194, and a touchscreen includes the touch sensor 180K and the display 194. The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the terminal 100 in a position different from a position of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a key input, and generate a key signal input related to a user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio play) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 simultaneously. The plurality of cards may be of a same type or different types. The SIM card interface 195 is also compatible with different types of SIM cards. The SIM card interface 195 is also compatible with an external storage card. The terminal 100 interacts with a network through the SIM card, to implement functions such as calling and data communication. In some embodiments, the terminal 100 uses an eSIM, namely, an embedded SIM card. The eSIM card may be embedded in the terminal 100, and cannot be separated from the terminal 100.

A software system of the terminal 100 may use a hierarchical architecture, an event-driven architecture, a microkernel architecture, a microservice architecture, or a cloud architecture. In embodiments of this application, an Android system with a hierarchical architecture is used as an example to describe a software structure of the terminal 100.

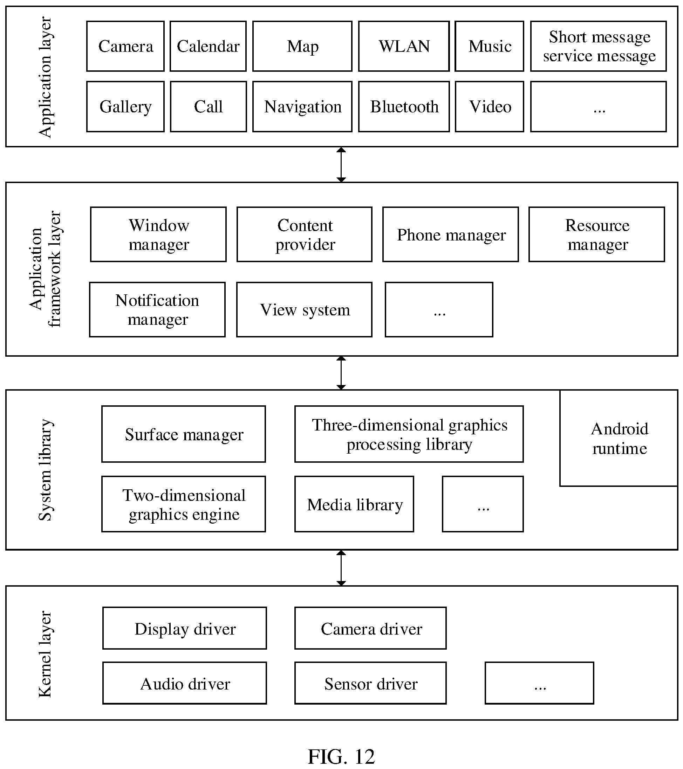

FIG. 12 is a block diagram of a software structure of a terminal 100 according to an embodiment of this application.

In a hierarchical architecture, software is divided into several layers, and each layer has a clear role and task. The layers communicate with each other through a software interface. In some embodiments, an Android system is divided into four layers from top to bottom: an application layer, an application framework layer, an Android runtime (Android runtime) and system library, and a kernel layer.

The application layer may include a series of application packages.

As shown in FIG. 12, the application packages may include applications such as a camera, a gallery, a calendar, a call, a map, navigation, WLAN, Bluetooth, music, a video, and a short message service message.

The application framework layer provides an application programming interface (application programming interface, API) and a programming framework for an application at the application layer. The application framework layer includes some predefined functions.

As shown in FIG. 12, the application framework layer may include a window manager, a content provider, a view system, a phone manager, a resource manager, a notification manager, and the like.

The window manager is configured to manage a window program. The window manager may obtain a size of A display, determine whether there is a status bar, perform screen locking, take a screenshot, and so on.

The content provider is configured to: store and obtain data, and enable the data to be accessed by the application. The data may include a video, an image, an audio, calls that are made and answered, a browsing history and a bookmark, an address book, and the like.

The view system includes visual controls such as a control for displaying a text and a control for displaying an image. The view system may be configured to construct the application. A display interface may include one or more views. For example, a display interface including a short message service message notification icon may include a text display view and an image display view.

The phone manager is configured to provide a communication function of the terminal 100, for example, management of a call status (including answering, declining, or the like).

The resource manager provides various resources such as a localized character string, an icon, an image, a layout file, and a video file for the application.

The notification manager enables the application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is played, the terminal vibrates, and an indicator light blinks.

The Android runtime includes a kernel library and a virtual machine. The Android runtime is responsible for scheduling and management of the Android system.

The kernel library includes two parts: a function that needs to be invoked in java language, and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG 4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes a working process of software and hardware of the terminal 100 by using an example with reference to a photographing capture scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a single-click touch operation, and a control corresponding to the single-click touch operation is a control of an icon of a camera application is used. The camera application invokes an interface of the application framework layer to enable the camera application, then enables the camera driver by invoking the kernel layer, and captures a static image or a video through the camera 193.

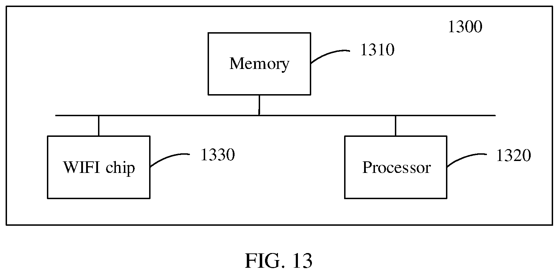

Based on a same inventive concept, an embodiment of this application further provides a terminal. FIG. 13 is a schematic diagram of a structure of a terminal according to an embodiment of this application. As shown in FIG. 13, the terminal provided in this embodiment includes a memory 1310 and a processor 1320. The memory 1310 is configured to store a computer program. The processor 1320 is configured to perform, when invoking the computer program, the method in the foregoing method embodiment.

The terminal may further include a wireless fidelity (Wireless Fidelity, WIFI) chip 1330. The WIFI chip 1330 may be used by a first terminal or a second terminal to receive and send communication data. For example, the first terminal may receive, by using the WIFI chip 1330, a beacon frame and a fourth action frame from a routing device, send a third action frame to the routing device, send a first action frame and a second action frame to the second terminal, send communication data to the second terminal, or receive communication data sent by the second terminal. The second terminal may receive the first action frame and the second action frame by using the WIFI chip, send the communication data to the first terminal, and receive the communication data sent by the first terminal.

The processor 1320 may be configured to process the foregoing information, for example, determine a frequency bandwidth of a 5 GHz channel used for communication, and indicate to switch the WIFI chip 1330 to the determined frequency bandwidth.

The terminal provided in this embodiment may perform the method embodiment. Implementation principles and technical effects of the terminal are similar to those of the method embodiment. Details are not described herein again.

An embodiment of this application further provides a computer-readable storage medium. The computer-readable storage medium stores a computer program. When the computer program is executed by a processor, the method in the foregoing method embodiment is implemented.

An embodiment of this application further provides a computer program product. When the computer program product runs on a terminal, the terminal is enabled to perform the method in the foregoing method embodiment.

When the foregoing integrated unit is implemented in the form of a software functional unit and sold or used as an independent product, the integrated unit may be stored in a computer-readable storage medium. Based on such an understanding, all or some of the processes of the method in embodiments of this application may be implemented by a computer program instructing related hardware. The computer program may be stored in a computer-readable storage medium. When the computer program is executed by the processor, steps of the foregoing method embodiments may be implemented. The computer program includes computer program code. The computer program code may be in a source code form, an object code form, an executable file form, some intermediate forms, or the like. The computer-readable storage medium may include at least any entity or apparatus that can include the computer program code in a photographing apparatus/terminal device, a recording medium, a computer memory, a read-only memory (Read-Only Memory, ROM), a random access memory (Random Access Memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunication signal according to legislation and patent practices.

In the foregoing embodiments, the descriptions in each embodiment have respective focuses. For a part that is not described in detail or recorded in an embodiment, refer to related descriptions in other embodiments.

Persons of ordinary skill in the art may be aware that, in combination with the examples described in embodiments disclosed in this specification, units and algorithm steps can be implemented by electronic hardware or a combination of computer software and the electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/ device and method may be implemented in other manners. For example, the described apparatus/device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application refers to any combination and all possible combinations of one or more associated listed items, and includes these combinations.

As used in the specification and the appended claims of this application, according to the context, the term "if' may be interpreted as "when" or "once" or "in response to determining" or "in response to detecting". Similarly, according to the context, the phrase "if it is determined that" or "if (a described condition or event) is detected" may be interpreted as a meaning of "once it is determined that" or "in response to determining" or "once (a described condition or event) is detected" or "in response to detecting (a described condition or event)".

In addition, in the descriptions in the specification and the appended claims of this application, the terms "first", "second", "third", and the like are merely used for distinguishing description, and shall not be understood as an indication or implication of relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

Finally, it should be noted that the foregoing embodiments are merely intended for describing the technical solutions in this application instead of limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, and these modifications or replacements do not make essence of the corresponding technical solutions depart from the scope of the technical solutions of embodiments of this application.

## Claims

1. A wireless communication system, wherein the system comprises a first terminal and a routing device, wherein
the routing device is configured to perform channel availability check CAC before performing communication based on a 5 GHz channel of a first frequency bandwidth, and broadcast a beacon frame on the 5 GHz channel of the first frequency bandwidth when detecting no radar signal, wherein the routing device is configured to operate on the 5 GHz channel of the first frequency bandwidth, and the first frequency bandwidth comprises a dynamic frequency selection DFS channel; and
the first terminal is configured to perform communication based on the 5 GHz channel of the first frequency bandwidth when the first terminal is configured to operate on the 5 GHz channel of the first frequency bandwidth and receives the beacon frame on the DFS channel.

2. The system according to claim 1, wherein the system further comprises a second terminal; and
the first terminal is further configured to: when receiving the beacon frame on the DFS channel, establish a communication connection to the second terminal based on the 5 GHz channel of the first frequency bandwidth, and communicate with the second terminal based on the communication connection.

3. The system according to claim 2, wherein the first terminal is further configured to: in a process of communicating with the second terminal based on the 5 GHz channel of the first frequency bandwidth, when detecting that the DFS channel comprises the radar signal, switch to a 5 GHz channel of a second frequency bandwidth, send communication data to the second terminal based on the 5 GHz channel of the second frequency bandwidth, and send a first action frame to the second terminal, wherein the second frequency bandwidth is less than the first frequency bandwidth, a center frequency of the second frequency bandwidth is the same as a center frequency of the first frequency bandwidth, the second frequency bandwidth does not comprise the DFS channel, and the first action frame indicates the second terminal to switch to the 5 GHz channel of the second frequency bandwidth; and
the second terminal is configured to: when receiving the first action frame, switch to the 5 GHz channel of the second frequency bandwidth, and send communication data to the first terminal based on the 5 GHz channel of the second frequency bandwidth.

4. The system according to claim 3, wherein the routing device is further configured to: in a process of performing communication based on the 5 GHz channel of the first frequency bandwidth, stop, when detecting that the DFS channel comprises the radar signal, broadcasting the beacon frame on the 5 GHz channel of the first frequency bandwidth, perform CAC check again when at least first preset duration after the stopping reaches, and broadcast the beacon frame on the 5 GHz channel of the first frequency bandwidth again when detecting no radar signal;
the first terminal is further configured to: in a process of sending the communication data to the second terminal based on the 5 GHz channel of the second frequency bandwidth, when receiving the beacon frame on the DFS channel again, switch to the 5 GHz channel of the first frequency bandwidth again, send communication data to the second terminal based on the 5 GHz channel of the first frequency bandwidth, and send a second action frame to the second terminal, wherein the second action frame indicates the second terminal to switch to the 5 GHz channel of the first frequency bandwidth; and
the second terminal is further configured to: when receiving the second action frame, switch to the 5 GHz channel of the first frequency bandwidth again, and send communication data to the first terminal based on the 5 GHz channel of the first frequency bandwidth.

5. The system according to claim 1, wherein the first terminal is further configured to: in a process of performing communication based on the 5 GHz channel of the first frequency bandwidth, when detecting that the DFS channel comprises the radar signal, switch to a 5 GHz channel of a second frequency bandwidth to perform communication, wherein the second frequency bandwidth is less than the first frequency bandwidth, a center frequency of the second frequency bandwidth is the same as a center frequency of the first frequency bandwidth, and the second frequency bandwidth does not comprise the DFS channel.

6. The system according to claim 5, wherein the routing device is further configured to: in a process of performing communication based on the 5 GHz channel of the first frequency bandwidth, stop, when detecting that the DFS channel comprises the radar signal, broadcasting the beacon frame on the 5 GHz channel of the first frequency bandwidth, perform CAC check again when at least first preset duration after the stopping reaches, and broadcast the beacon frame on the 5 GHz channel of the first frequency bandwidth again when detecting no radar signal; and
the first terminal is further configured to: in a process of performing communication based on the 5 GHz channel of the second frequency bandwidth, when receiving the beacon frame on the DFS channel again, switch to the 5 GHz channel of the first frequency bandwidth again to perform communication.

7. The system according to claim 1, wherein the system comprises a plurality of routing devices, and the first terminal is further configured to determine, based on a routing device identifier comprised in the beacon frame, a quantity of routing devices that currently perform communication based on the 5 GHz channel of the first frequency bandwidth, and perform communication based on the 5 GHz channel of the first frequency bandwidth when determining that the quantity of routing devices is greater than a preset quantity threshold.

8. The system according to claim 7, wherein the first terminal is further configured to increase the quantity of routing devices by 1 when obtaining the routing device identifier from the beacon frame and determining that the routing device identifier belongs to a preset routing device whitelist.

9. The system according to claim 7, wherein the first terminal is further configured to increase the quantity of routing devices by 1 when obtaining the routing device identifier from the beacon frame and determining that the routing device identifier does not belong to a preset routing device blacklist.

10. The system according to any one of claims 7 to 9, wherein the first terminal is further configured to perform communication based on a 5 GHz channel of a second frequency bandwidth when determining that the quantity of routing devices is less than or equal to the preset quantity threshold, wherein the second frequency bandwidth is less than the first frequency bandwidth, a center frequency of the second frequency bandwidth is the same as a center frequency of the first frequency bandwidth, and the second frequency bandwidth does not comprise the DFS channel.

11. The system according to any one of claims 1 to 9, wherein the first terminal is further configured to perform communication based on the 5 GHz channel of the first frequency bandwidth when the first terminal is configured to operate on the 5 GHz channel of the first frequency bandwidth and receives the beacon frame on the DFS channel within second preset duration after the configuration, wherein the second preset duration is less than CAC check duration.

12. The system according to claim 11, wherein the first terminal is further configured to perform communication based on the 5 GHz channel of the second frequency bandwidth when the first terminal is configured to operate on the 5 GHz channel of the first frequency bandwidth but does not receive the beacon frame on the DFS channel within the second preset duration, wherein the second frequency bandwidth is less than the first frequency bandwidth, the center frequency of the second frequency bandwidth is the same as the center frequency of the first frequency bandwidth, and the second frequency bandwidth does not comprise the DFS channel.

13. The system according to any one of claims 1 to 9, wherein the first terminal is further configured to: send a third action frame to the routing device when the first terminal is configured to operate on the 5 GHz channel of the first frequency bandwidth, receive a fourth action frame sent by the routing device based on the third action frame, and perform communication based on the 5 GHz channel of the first frequency bandwidth when determining, based on the fourth action frame, that the DFS channel is available or receiving the beacon frame on the DFS channel, wherein the third action frame requests to query whether the DFS channel is available, and the fourth action frame indicates a query result of the DFS channel; and
the routing device is further configured to: if the routing device receives the third action frame, query whether the DFS channel is available, and send the fourth action frame to the first terminal based on the query result.

14. The system according to any one of claims 2 to 4, wherein the first terminal comprises an access point AP or a group owner GO, and the second terminal comprises a station STA or a group client GC.

15. The system according to any one of claims 1 to 9, wherein the routing device is further configured to perform CAC check after a startup, after initialization, or before entering the 5 GHz channel of the first frequency bandwidth again.

16. The system according to any one of claims 3 to 6, wherein the first frequency bandwidth comprises 160 MHz, the second frequency bandwidth comprises 80 MHz, and the DFS channel comprises 5.26 GHz to 5.32 GHz.

17. The system according to claim 4 or 6, wherein the first preset duration is greater than or equal to 30 minutes.

18. A wireless communication system, wherein the system comprises a first terminal and a routing device, wherein
the first terminal is configured to: send a third action frame to the routing device on a non-DFS channel when the first terminal is configured to operate on a 5 GHz channel of a first frequency bandwidth, receive a fourth action frame sent by the routing device based on the third action frame, and perform communication based on the 5 GHz channel of the first frequency bandwidth when determining, based on the fourth action frame, that a DFS channel is available, wherein the first frequency bandwidth comprises the DFS channel, the third action frame requests to query whether the DFS channel is available, and the fourth action frame indicates a query result of the DFS channel; and
the routing device is configured to: when receiving the third action frame, query whether the DFS channel is available, and send the fourth action frame to the first terminal based on the query result.

19. The system according to claim 18, wherein the system further comprises a second terminal; and
the first terminal is further configured to: if the first terminal determines, based on the fourth action frame, that the DFS channel is available, establish a communication connection to the second terminal based on the 5 GHz channel of the first frequency bandwidth, and communicate with the second terminal based on the communication connection.

20. The system according to claim 19, wherein the first terminal is further configured to: in a process of communicating with the second terminal based on the 5 GHz channel of the first frequency bandwidth, when detecting that the DFS channel comprises a radar signal, switch to a 5 GHz channel of a second frequency bandwidth, send communication data to the second terminal based on the 5 GHz channel of the second frequency bandwidth, and send a first action frame to the second terminal, wherein the second frequency bandwidth is less than the first frequency bandwidth, a center frequency of the second frequency bandwidth is the same as a center frequency of the first frequency bandwidth, the second frequency bandwidth does not comprise the DFS channel, and the first action frame indicates the second terminal to switch to the 5 GHz channel of the second frequency bandwidth; and
the second terminal is configured to: when receiving the first action frame, switch to the 5 GHz channel of the second frequency bandwidth, and send communication data to the first terminal based on the 5 GHz channel of the second frequency bandwidth.

21. The system according to claim 20, wherein the first terminal is further configured to: in a process of sending the communication data to the second terminal based on the 5 GHz channel of the second frequency bandwidth, send the third action frame to the routing device again when duration after latest switching to the 5 GHz channel of the second frequency bandwidth reaches at least first preset duration, receive again the fourth action frame sent by the routing device based on the third action frame, switch to the 5 GHz channel of the first frequency bandwidth again when determining, based on the fourth action frame, that the DFS channel is available, send communication data to the second terminal based on the 5 GHz channel of the first frequency bandwidth, and send a second action frame to the second terminal, wherein the second action frame indicates the second terminal to switch to the 5 GHz channel of the first frequency bandwidth; and
the second terminal is further configured to: when receiving the second action frame again, switch to the 5 GHz channel of the first frequency bandwidth again, and send communication data to the first terminal based on the 5 GHz channel of the first frequency bandwidth.

22. The system according to claim 20, wherein the first terminal is further configured to: in a process of sending the communication data to the second terminal based on the 5 GHz channel of the second frequency bandwidth, when receiving, on the DFS channel, a beacon frame sent by the routing device, switch to the 5 GHz channel of the first frequency bandwidth again, send communication data to the second terminal based on the 5 GHz channel of the first frequency bandwidth, and send a second action frame to the second terminal.

23. A wireless communication method, applied to a first terminal in a wireless communication system, wherein the wireless communication system further comprises a routing device; and comprising:
performing communication based on a 5 GHz channel of a first frequency bandwidth when being configured to operate on the 5 GHz channel of the first frequency bandwidth and receiving a beacon frame on a DFS channel, wherein
the beacon frame is broadcast by the routing device on the 5 GHz channel of the first frequency bandwidth when the routing device performs CAC check before performing communication based on the 5 GHz channel of the first frequency bandwidth and detects no radar signal, wherein the routing device is configured to operate on the 5 GHz channel of the first frequency bandwidth, and the first frequency bandwidth comprises the DFS channel.

24. A wireless communication method, applied to a first terminal in a wireless communication system, wherein the wireless communication system further comprises a routing device; and comprising:
sending a third action frame to the routing device on a non-DFS channel when being configured to operate on the 5 GHz channel of the first frequency bandwidth;
receiving a fourth action frame sent by the routing device based on the third action frame; and
performing communication based on the 5 GHz channel of the first frequency bandwidth when determining, based on the fourth action frame, that the DFS channel is available, wherein
the first frequency bandwidth comprises the DFS channel, the third action frame requests to query whether the DFS channel is available, the fourth action frame indicates a query result of the DFS channel, and the fourth action frame is sent by the routing device to the first terminal based on the query result after the routing device receives the third action frame and queries whether the DFS channel is available.

25. A terminal, comprising a memory and a processor, wherein the memory is configured to store a computer program, and the processor is configured to perform the method according to claim 23 or 24 when invoking the computer program.

26. A computer-readable storage medium, wherein the computer-readable storage medium stores a computer program, and the method according to claim 23 or 24 is implemented when the computer program is executed by a processor.
